(19) Europäisches Patentamt
European Patent Office
Office européen des brevets

(11) **EP 4 757 105 A1**

(12) **EUROPEAN PATENT APPLICATION**

(43) Date of publication:
**10.06.2026 Bulletin 2026/24**

(21) Application number: **24217033.0**

(22) Date of filing: **03.12.2024**

(51) International Patent Classification (IPC):
**H02J 3/40** $^{(2026.01)}$    **F03D 7/04** $^{(2006.01)}$

(52) Cooperative Patent Classification (CPC):
**H02J 3/40; F03D 7/0284;** F03D 7/0272;
F05B 2270/1033; H02J 2101/28

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ABB Schweiz AG**
**5400 Baden (CH)**

(72) Inventors:
• **KARACA, Orcun**
  **8008 Zürich (CH)**
• **TSOUMAS, Ioannis**
  **8032 Zürich (CH)**
• **SCHWEIZER, Mario**
  **5406 Rütihof (CH)**

(74) Representative: **Sykora & König Patentanwälte
PartG mbB
Maximilianstraße 2
80539 München (DE)**

(54) **METHOD AND CONTROL UNIT FOR OPERATING A CONVERTER ARRANGEMENT, CONVERTER ARRANGEMENT AND COMPUTER PROGRAM**

(57)     A method for operating a converter arrangement (20) is provided. The converter arrangement has at least one electrical converter (22) electrically coupling a generator (26) to a grid (28) and a control unit (24) for operating the electrical converter (22). The method comprises: receiving an input vector ($v_{con}$, $v_{pcc}$, $i_{act}$) being representative of an electric power of the electrical converter (22); estimating a synchronization power value ($\Delta P$) being representative of a synchronization power needed for synchronizing the electrical converter (22) to the grid (28); determining a generator power reference value ($P_{gen,ref}$) from the input vector ($v_{con}$, $v_{pcc}$, $i_{act}$) and the estimated synchronization power value ($\Delta P$); generating a control signal (CS) for the electrical converter (22) depending on the determined generator power reference value ($P_{gen,ref}$); and sending the control signal (CS) to the electrical converter (22), wherein the control signal (CS) and the electrical converter (22) are configured such that the electrical converter (22) tries to generate the electric power corresponding to the generator power reference value ($P_{gen,ref}$).

**Fig. 1**

**Description**

FIELD OF THE INVENTION

The invention relates to the field of electrical converters and in particular of electrical converter control. In particular, the invention relates to a method and a control unit for operating a converter arrangement comprising an electrical converter and the control unit, to the converter arrangement and to a computer program on which the computer program is stored.

BACKGROUND OF THE INVENTION

Many studies have shown that there is a risk of grid instability if the corresponding grid is equipped with a high percentage of converter-interfaced energy resources that do not employ any grid-forming control loops. To this end, the recent grid codes have them as a requirement for grid-connected power converters. However, this requirement implies that the grid-side power is dictated by grid-forming control and it cannot be manipulated with a large enough bandwidth to achieve the control of the DC link voltage. Therefore, in these applications, the DC link control is often assigned to the generator-side, e.g., in grid-forming converters of wind turbines.

The grid-forming control requirements such as phase-jump power imply that the output power of the generator has to change rapidly. Therefore, balancing the DC link voltage on the generator-side could entail sudden changes in torque. The sudden changes can have a significant impact on the lifetime of the wind turbine blades. Therefore, wind turbine manufacturers typically define a maximum value to the rate of change of the torque. Furthermore, such sudden torque changes can create dangerous torsional vibrations in the drive train. As an alternative, grid-forming control designs may be used where the synchronizations of both the grid- and the generator-side are done via the DC link voltages. In some sense, these controllers could potentially allow providing a part of the necessary synchronization power from the DC link capacitors. However, these are significantly different from the existing grid-forming controllers, and they imply a complete overhaul of the conventional generator control loops. Moreover, they may not be compatible with the tight upper and lower limits on how much the DC link voltage is allowed to vary. Here, the upper limit generally originates from the semiconductor devices' safe operating area, whereas the lower limit may originate from the minimum DC link voltage needed to synthesize the AC voltage on the generator side and on the grid side.

DESCRIPTION OF THE INVENTION

It is an objective of the present invention to provide a method and a control unit for operating a converter arrangement, which enable the usage of a grid-forming controller on the grid-side, which may contribute to limit the changes in a generator torque with a minimal change to the existing control loops, while keeping the DC link voltage within its safety limits, and/or to enable a stable grid interconnection and/or to maintain synchronism even when the torque dynamics have a limited bandwidth, especially during transient states.

This objective is achieved by the subject-matter of the independent claims. Further exemplary embodiments are evident from the dependent claims and the following description.

A first aspect relates to a method for operating a converter arrangement. The converter arrangement has at least one electrical converter electrically coupling a generator to a grid and a control unit for operating the electrical converter. The method comprises: receiving an input vector being representative of an electric power of the electrical converter; estimating a synchronization power value being representative of a synchronization power needed for synchronizing the electrical converter to the grid; determining a generator power reference value from the input vector and the estimated synchronization power value; generating a control signal for the electrical converter depending on the determined generator power reference value; and sending the control signal to the electrical converter, wherein the control signal and the electrical converter are configured such that the electrical converter tries to generate the electric power corresponding to the generator power reference value upon receiving the control signal.

A second aspect relates to a control unit for operating the converter arrangement. The control unit comprises: a memory for storing one or more input vectors and power reference values; and a processor communicatively coupled with the memory and being configured to carry out the method in accordance with one of the preceding claims based on the input vectors and power reference values stored in the memory.

A third aspect relates to the converter arrangement. The converter arrangement comprises: the at least one electrical converter configured for electrically coupling the generator to the grid; and the control unit and is communicatively coupled to the electrical converter for driving the electrical converter.

A fourth aspect relates to a computer program. The computer program comprises computer-readable instructions which, when being executed by the processor of the control unit, force the control unit to carry out the method at the electrical converter of the converter arrangement. The computer program may be stored on a computer-readable medium.

The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading the program code. In general, the computer-readable medium may be a non-transitory or transitory medium.

It has to be understood that some features of the present invention are described with respect to one of the aspects only for conciseness reasons and to avoid unnecessary repetitions, but that these features may be easily transferred to one or more of the other aspects by the person skilled in the art.

Considering the above-mentioned voltage limits and existing control schemes, a modification to the conventional generator-side DC link control scheme is provided herewith that enables a grid-forming controller on the grid-side. To this end, a generator-side DC link control scheme is proposed that allows for DC link voltage swings towards enabling grid-forming control, as long as the DC link voltage can be kept within certain limits. The modification is done by a DC link voltage reference droop based on the synchronization power needed for grid-forming control, in particular by changing the control bandwidth to provide the necessary synchronization power partly from the DC link. This implies an event-based change in the DC link control bandwidth, whenever it is possible to keep the DC link voltage within its safety limits. This may contribute to limit the changes in the generator torque with a minimal change to the existing control loops, while keeping the DC link voltage within its safety limits.

Vividly spoken, the method and control unit as described above and in the following enable to manipulate a DC link voltage reference based on the synchronization power needed for the synchronization. This is the first method that manipulates the DC link voltage reference of a conventional generator-side DC link controller in order to limit the changes in torque of the generator and to then enable the use of a grid-forming controller on the grid-side.

The key advantage of the proposed method and control unit may be to enable a stable grid interconnection and to maintain synchronism even when the torque dynamics have a limited bandwidth. This is especially important during transient states, where a sudden change in output power is needed. The proposed method and control unit may enable to effectively smooth generator torque steps that may excite mechanical resonances and may damage the wind turbine. The proposed method and control unit are simple and preserve all design elements of a standard DC link controller on the generator-side and a standard grid-forming controller on the grid-side. This may contribute to reduce the corresponding engineering effort. Computing the new DC link voltage reference may be done such that it is computationally not expensive, and it may be computed from already available quantities. Compared to the existing and known approaches, the proposed method and control unit involve a control modification that not only limits the torque changes, but also guarantees that the DC link voltage stays within its safety limits at all times. The method is robust in maintaining the DC link voltage within these limits. It may help reducing an activation of a voltage-limiting unit by changing the control-bandwidth without a complicated switch-over logic.

The method may be carried out by the control unit. The control unit may be configured for operating the electrical converter. The power reference values may be one or more out of a group of power reference values, the group comprising voltage references or current references, e.g., voltage reference values, voltage reference vectors, current reference values, and/or current reference values. The input vector, and the grid power reference value may be received by the processor of the control unit. The input vector may be measured by a corresponding measurement unit, as further explained below, and may be sent to the control unit. The grid power reference value may be determined by a grid controller and may be sent to the control unit, or may be stored on the memory of the control unit and may be received by the processor to carry out the method.

That the electrical converter "tries" to generate the generator power corresponding to the generator power reference value may mean that semiconductor switches of the electrical converter are controlled such that the generator power corresponding to the generator power reference value can be achieved, but that in the reality the magnitude of the generator power actually achieved by the electrical converter may deviate from the corresponding generator power reference value.

That the synchronization power value may be estimated may mean that the synchronization power value is estimated based on one or more measured parameter values, e.g., depending on the received input vector or derived from the received input vector, because every measurement is an estimation in the reality.

According to an embodiment, the received input vector is a voltage vector being representative of a voltage of the electrical converter, or the current vector being representative of a current through the electrical converter. Optionally, two input vectors may be received from which the generator power reference value may be determined, wherein one of these two input vectors may be the voltage vector, and the other one of these two input vectors may be the current vector.

The voltage of the electrical converter may be a voltage to be provided by the electrical converter, in other words a reference voltage for the electrical converter, or a voltage measured at the electrical converter, e.g., a PCC voltage measured between a Point of Common Coupling (PCC) and a ground potential; or a grid-side converter voltage measured between the electrical converter and a transformer coupling the electrical converter to the grid, or read, in other words received, from the memory of the control unit. The reference voltage may be determined by a current controller of the control unit. The measured voltage may be a voltage vector and/or may be measured by a voltmeter (not shown). The voltmeter may be a component of the electrical converter or of the controller unit carrying out the method. The voltmeter may generate a signal in which the voltage vector is encoded. The signal may be transferred from the voltmeter to the control unit such that the control unit receives the signal and thereby the voltage vector encoded in the signal. The voltage vector may be given in the $\alpha\beta$-frame. The current vector may be measured by an amperemeter. The amperemeter may be a component of the electrical converter or of the controller unit carrying out the method. The amperemeter may generate a signal in which the current vector is encoded. The signal may be transferred from the amperemeter to the control unit such that the control unit receives the signal and thereby the current vector encoded in the signal. The current vector may be given in the $\alpha\beta$-frame.

According to an embodiment, the synchronization power value is estimated by receiving a grid power reference value being representative of an electric power to be provided by the grid; by determining an actual grid power value being representative of an electric power currently provided by the grid from the input vector; and by determining a first difference between the grid power reference value and the actual grid power value, wherein the determined difference is used as the synchronization power value. Optionally, the estimated synchronization power value may be filtered. In this case, the filtered synchronization power value may be used as the synchronization power value afterwards. The actual grid power value may be estimated, e.g., from one or more other measured values, e.g., from the input vector. In the latter case, the actual grid power value may be referred to as measured grid power value.

According to an embodiment, the synchronization power value is estimated by receiving the grid power reference value being representative of the electric power to be provided by the grid, or determining the actual grid power value being representative of the electric power currently provided by the grid from the input vector; and filtering the received grid power value, wherein the corresponding filtered grid power value is used as the synchronization power value. In particular, the received grid power value may be filtered by a high-pass filter.

According to an embodiment, the synchronization power value is estimated by receiving a grid current reference vector being representative of at least a part of the current to be provided to the grid; and by estimating the synchronization power value from the received grid current reference vector. For example, the grid current reference vector may be multiplied by the voltage vector, in particular by an actual PCC voltage vector being representative of the actual PCC voltage or by an actual grid-side voltage vector being representative of the actual grid-side voltage, wherein the corresponding product corresponds to the estimated synchronization power value. That the grid current reference vector is representative of "at least a part of the current to be provided to the grid" may mean that the grid current reference vector could correspond to the current references generated for droop, inertia, and/or damping functionality. It could be the part corresponding to a virtual admittance current reference.

According to an embodiment, the generator power reference value is determined from the input vector and the estimated synchronization power value by modifying a DC link voltage reference vector by the estimated synchronization power value; by determining the actual grid power value being representative of an electric power currently provided by the grid from the received input vector; and by determining the generator power reference value from the modified DC link voltage reference vector and the actual grid power value. According to an embodiment, the DC link voltage reference vector is modified by the estimated synchronization power value by filtering the estimated synchronization power value; and by subtracting the filtered estimated synchronization power value from the DC link voltage reference vector. That the filtered estimated synchronization power value is subtracted "from" the voltage reference vector may mean in this context that the filtered estimated synchronization power value may be simply subtracted from the voltage reference vector. Alternatively, this may mean that the filtered estimated synchronization power value may be subtracted from N times the voltage reference vector. Optionally, the voltage reference vector may be further modified by a saturation block of the control unit, wherein the saturation block modifies the result of the subtraction such that the result stays within predetermined limits. In this case, the generator power reference value may be determined from the further modified voltage reference vector.

According to an embodiment, the generator power reference value is determined from the modified DC link voltage reference value by receiving a DC link voltage vector being representative of a DC link voltage of the electrical converter; determining a second difference between the modified DC link voltage reference vector and the received DC link voltage vector, and by determining the generator power reference value from the second difference. The DC link voltage vector may be measured at the DC link of the electrical converter and may be sent to the control unit.

According to an embodiment, the method comprises: determining an actual grid power value being representative of an electric power currently provided by the grid from the received input vector; and determining the generator power reference value from the actual grid power value.

According to an embodiment, the generator power reference value is determined from the actual grid power measurement value by filtering the actual grid power measurement value, and by adding the filtered grid power measurement value to the modified DC link voltage reference value, wherein the resulting sum is used as the generator power reference value.

According to an embodiment, the generator power reference value is determined from the input vector and the estimated synchronization power value by modifying a DC link voltage reference vector by the estimated synchronization power value; and determining the generator power reference value from the modified DC link voltage reference value.

According to an embodiment, the converter arrangement has at least two electrical converters and the generator power reference value is determined from the input vector and the estimated synchronization power value by receiving at least one DC link voltage vector for each of the electrical converters, with the DC link voltage vectors being representative of an electric power of the corresponding electrical converter, by determining the actual grid power value being representative of the electric power currently provided by the grid from the received input vector, and by determining the generator power reference value from a sum of the received DC link voltage vectors and the determined actual grid power value.

These and other aspects of the invention will be apparent from and elucidated with reference to the embodiments described hereinafter.

BRIEF DESCRIPTION OF THE DRAWINGS

The subject matter of the invention will be explained in more detail in the following text with reference to exemplary embodiments which are illustrated in the attached drawings.

Fig. 1 shows a schematic block diagram of an exemplary embodiment of a generator coupled to a grid by a converter arrangement;
Fig. 2 shows a block diagram of an exemplary embodiment of a DC link controller of the converter arrangement;
Fig. 3 shows a block diagram of an exemplary embodiment of a DC link controller of the converter arrangement;
Fig. 4 shows a block diagram of an exemplary embodiment of a DC link controller of the converter arrangement;
Fig. 5 shows a block diagram of an exemplary embodiment of a DC link controller of the converter arrangement;
Fig. 6 shows a block diagram of an exemplary embodiment of a DC link controller of the converter arrangement;
Fig. 7 shows a block diagram of an exemplary embodiment of a DC link controller of the converter arrangement;
Fig. 8 shows a block diagram of an exemplary embodiment of a DC link controller of the converter arrangement; and
Fig. 9 shows a block diagram of an exemplary embodiment of a DC link controller of the converter arrangement.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

[Special embodiments of the invention]

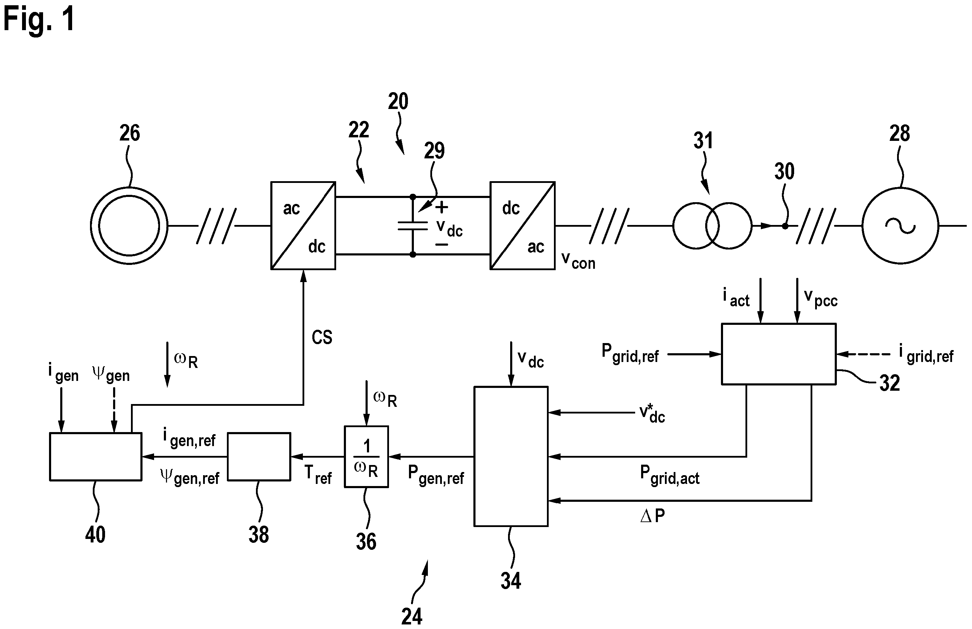

Fig. 1 shows a schematic block diagram of an exemplary embodiment of a generator 26 coupled to a grid 28 by a converter arrangement 20. The generator 26 may be a component of a wind turbine or of another renewable-energy generating device (not shown).

The converter arrangement 20 comprises at least one electrical converter 22 and a control unit 24. The electrical converter 22 is configured for electrically coupling the generator 26 to the grid 28. The electrical converter 22 may comprise a generator-side AC/DC converter, a grid-side DC/AC converter, and a DC link 29 coupling the generator-side AC/DC converter to the grid-side DC/AC converter. The electrical converter 22 may be coupled to a Point of Common Coupling (PCC) (30) for electrically coupling the electrical converter 22 to the grid 28 by a transformer 31.

The control unit 24 is communicatively coupled to the electrical converter 22 and is configured for driving the electrical converter 22. The control unit 24 has a power estimator 32, a DC link controller 34, a first control block 36, a current/flux reference block 38, and a current/flux controller 40. In addition, the control unit 24 has a memory and a processor (not shown). The memory may be configured to store one or more input vectors, power values, and/or power references. The processor is communicatively coupled with the memory and is configured to carry out a method for operating the electrical converter 22 based on the input vectors, power values, and/or power reference values stored in the memory. The power references may be one or more out of a group of power references, the group comprising voltage references or current references, e.g., voltage reference values, voltage reference vectors, current reference values, and/or current reference values.

The method is explained in the following with the help of the block diagrams shown in figure 1 and the further block diagrams explained below.

The control unit 24 receives an input vector being representative of an electric power of the electrical converter 22. In particular, the input vector may be received by the processor of the control unit 24 and may be processed by the power estimator 32. The input vector may be measured by a corresponding measurement unit, as further explained below, and may be sent to the control unit 24. The received input vector may be a voltage vector being representative of a voltage of the electrical converter 22, or a current vector being representative of a current of the electrical converter 22.

The voltage of the electrical converter 22 may be a voltage provided by the electrical converter 22, in other words a reference voltage for the electrical converter 22, or a voltage measured at the electrical converter 22, e.g., a PCC voltage vector $v_{pcc}$ measured between the PCC 30 and a ground potential or a converter voltage vector $v_{con}$ measured between the electrical converter 22 and the transformer 31. The reference voltage may be determined by the current controller 46 and may be encoded in a control signal CS for operating the electrical converter 22. The measured voltage may be measured by a voltmeter (not shown). The voltmeter may be a component of the electrical converter 22 or of the controller unit 24 carrying out the method. The voltmeter may generate a signal in which the measured voltage vector is encoded. The signal may be transferred from the voltmeter to the control unit 24 such that the control unit 24 receives the signal and thereby the voltage vector encoded in the signal. The voltage vector may be given in the αβ-frame.

The current vector may be a current to provided by the electrical converter 22, in other words a reference current for the electrical converter 22, e.g., a grid current reference vector $i_{grid,ref}$, or a current measured at the electrical converter 22, e.g., an actual current vector $i_{act}$ measured at the PCC 30. The actual current vector $i_{act}$ may be measured by an amperemeter (not shown). The amperemeter may be a component of the electrical converter 22 or of the controller unit 24 carrying out the method. The amperemeter may generate a signal in which the actual current vector $i_{act}$ is encoded. The signal may be transferred from the amperemeter to the control unit 24 such that the control unit 24 receives the signal and thereby the actual current vector $i_{act}$ encoded in the signal. The actual current vector $i_{act}$ may be given in the αβ-frame.

The power estimator 32 may receive the actual current vector $i_{act}$ and/or the PCC voltage vector $v_{pcc}$, and a grid power reference value $P_{grid,ref}$. The power estimator 32 may estimate a synchronization power value $\Delta P$ being representative of a synchronization power needed for synchronizing the electric power of the electrical converter 22 with an electric power of the grid 28. The grid power reference value $P_{grid,ref}$ may be determined by a grid controller (not shown) of the grid 28 and may be sent to the control unit 24, or may be stored on the memory of the control unit 24 and may be received by the processor to carry out the method.

The synchronization power value $\Delta P$ may be estimated in at least four different ways, explained in the following.

Firstly, the synchronization power value $\Delta P$ may be estimated by determining an actual grid power value $P_{grid,act}$ being representative of an electric power currently provided by the grid 28 from the input vector and by determining a first difference between the grid power reference value $P_{grid,ref}$ and the actual grid power value $P_{grid,act}$, wherein the determined difference is used as the synchronization power value $\Delta P$:

$$\Delta P = P_{grid,act} - P_{grid,ref}$$

Optionally, the estimated synchronization power value $\Delta P$ may be filtered. In this case, the filtered synchronization power value may be used as the synchronization power value $\Delta P$ afterwards. The actual grid power value $P_{grid,act}$ may be estimated, e.g., from one or more other measured values, e.g., from the input vector, in particular from the actual current vector $i_{act}$ and/or the PCC voltage vector $v_{pcc}$. The actual grid power value $P_{grid,act}$ may be referred to as measured grid power value $P_{grid,meas}$.

Secondly, the synchronization power value $\Delta P$ may be estimated by filtering the received or determined grid power value, in particular the grid power reference value $P_{grid,ref}$ or, respectively, the actual grid power value $P_{grid,act}$, wherein the corresponding filtered grid power value is used as the synchronization power value $\Delta P$. In particular, the received or, respectively, determined grid power value $P_{grid,act}$, $P_{grid,ref}$ may be filtered by a high-pass filter (not shown):

$$\Delta P = H_{HPF}(s)P_{grid,meas},$$

where $H_{HPF}(s)$ represent the transfer function of the corresponding high-pass filter.

Thirdly, the synchronization power value $\Delta P$ may be estimated by receiving the grid current reference vector $i_{grid,ref}$ being representative of at least a part of the current to be provided to the grid 28, and by estimating the synchronization power value $\Delta P$ from the received grid current reference vector $i_{grid,ref}$ and the input vector being a voltage vector, in particular a grid-side converter voltage vector $v_{con}$ being representative of the actual PCC voltage, wherein the corresponding product corresponds to the estimated synchronization power value $\Delta P$:

$$\Delta P = v_{con}^T i_{grid,ref}$$

Fourthly, the synchronization power value $\Delta P$ may be estimated by receiving the grid current reference vector $i_{grid,ref}$ being representative of at least a part of the current to be provided to the grid 28, and by estimating the synchronization power value $\Delta P$ from the received grid current reference vector $i_{grid,ref}$ and the input vector being another voltage vector, in particular a PCC voltage vector $v_{pcc}$ also being representative of the actual PCC voltage, wherein the corresponding product corresponds to the estimated synchronization power value $\Delta P$:

$$\Delta P = v_{pcc}^{T} i_{grid,ref}$$

The power estimator 32 may send the actual grid power value $P_{grid,act}$ and the synchronization power value $\Delta P$ to the DC link controller 34.

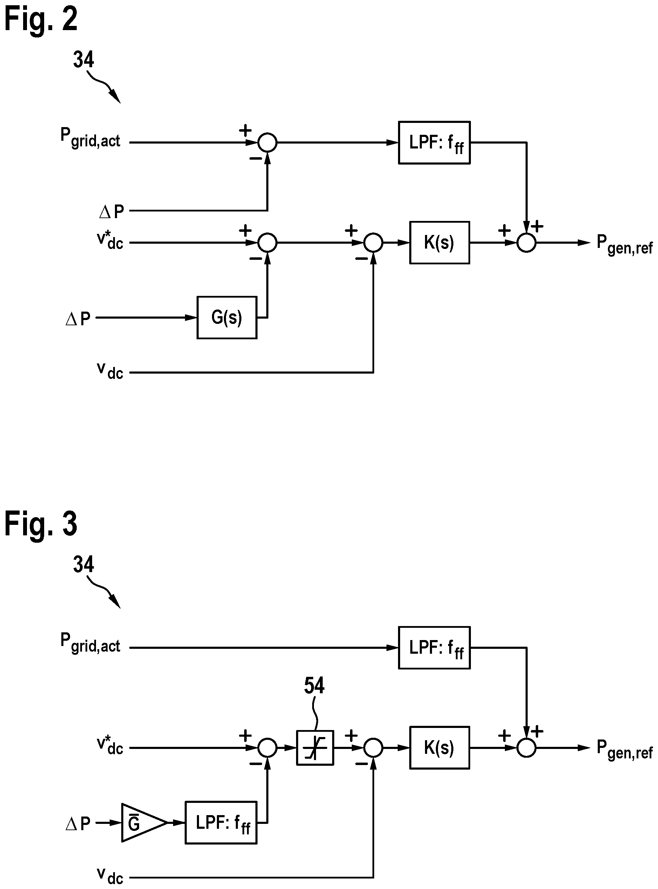

The DC link controller 34 additionally may receive a DC link voltage vector $v_{dc}$, being representative of an actual DC link voltage at the DC link 29. The DC link voltage vector $v_{dc}$ may be measured at the DC link 29, e.g., by a corresponding voltmeter (not shown). In addition, the DC link controller 34 may receive a DC link voltage reference vector $v_{dc}^{*}$. The DC link voltage reference vector $v_{dc}^{*}$ may correspond to a nominal voltage of the electrical converter 22. The DC link voltage reference vector $v_{dc}^{*}$ may be determined in advance from the capacitors and/or semiconductor chips used in the electrical converter 22, e.g., because of safety limits, e.g., of the generator 26. The predetermined DC link voltage reference vector $v_{dc}^{*}$ may be stored on the memory of the control unit 24. The DC link controller 34 may generate a generator power reference value $P_{gen,ref}$ from the actual grid power value $P_{grid,act}$, the synchronization power value $\Delta P$, and the DC link voltage vector $v_{dc}$, as explained below with respect to figures 2 to 9.

The first control block 36 may receive the generator power reference value $P_{gen,ref}$ from the DC link controller 34. In addition, the first control block 36 may receive a rotational speed value $\omega_R$ being representative of a rotational speed of the generator 26. The rotational speed value $\omega_R$ may be determined by measurement, e.g., by an encoder (not shown) at the generator 26, or may be estimated from other quantities, as it is known in the art. The first control block 36 may determine a torque reference value $T_{ref}$ from the generator power reference value $P_{gen,ref}$ and the rotational speed value $\omega_R$, as it is known in the art. Alternatively, the first control block 36 may determine a new pitch angle for the generator 26 from the generator power reference value $P_{gen,ref}$ and the rotational speed value $\omega_R$, as it is known in the art.

In case of the torque reference value $T_{ref}$ being determined, the torque reference value $T_{ref}$ may be further processed in two different ways.

The first way may be to determine a generator current reference vector $i_{gen,ref}$ from the torque reference value $T_{ref}$, e.g., by the current/flux reference block 38, which may be referred to as current reference block in this context, and to determine the control signal CS from the generator current reference vector $i_{gen,ref}$ and from a generator current vector $i_{gen}$ which may be representative of an actual current of the generator 26. The actual current of the generator 26 may be measured or estimated, and may be referred to as measured or estimated current of the generator 26.

The second way may be to determine a generator flux reference vector $\Psi_{gen,ref}$ from the torque reference value $T_{ref}$, e.g., by the current/flux reference block 38, which may be referred to as flux reference block in this context, and to determine the control signal CS from the generator flux reference vector $\Psi_{gen,ref}$ and from a generator flux vector $\Psi_{gen}$ which may be representative of an actual flux of the generator 26.

The current/flux controller 40 may generate the control signal CS via Pulse Width Modulation (PWM) or via mode predictive control, as they are known in the art. Then, the current/flux controller 40 may send the control signal CS to the electrical converter 22. The control signal CS and the electrical converter 22 are configured such that the electrical converter 22 tries to generate the electric power corresponding to the generator power reference value $P_{gen,ref}$.

Fig. 2 shows a block diagram of an exemplary embodiment of the DC link controller 34 of the converter arrangement 20. As may be seen from figure 2, the generator power reference value $P_{gen,ref}$ may be determined from the dc link voltage vector $v_{dc}$, and the estimated synchronization power value $\Delta P$ by modifying the DC link voltage reference vector $v_{dc}^{*}$ by the estimated synchronization power value $\Delta P$, and by determining the generator power reference value $P_{gen,ref}$ from the modified DC link voltage reference vector $v_{dc}^{*}$. For example, the DC link voltage reference vector $v_{dc}^{*}$ may be modified by the estimated synchronization power value $\Delta P$ by filtering the estimated synchronization power value $\Delta P$. A transfer function G(s) of the corresponding filter may be G(s) = G/s, with G representing a gain and with 1/s representing an integrator. So, the corresponding filter scales and integrates its inputs.

Then, the filtered estimated synchronization power value $\Delta P$ may be subtracted from the DC link voltage reference vector $v_{dc}^{*}$. The resulting difference may be processed by another function $K(S)$ and the correspondingly processed difference may be added to a modified actual grid power value $P_{grid,act}$ to get the generator power reference value $P_{gen,ref}$. To this end, the actual grid power value $P_{grid,act}$ may be modified by subtracting the estimated synchronization power value $\Delta P$ therefrom and optionally by filtering the resulting difference, e.g., by a low-pass filter LPF. The function $K(s)$ may be a transfer function. The function $K(s)$ may be representative of a linear controller, a look-up table, or a nonlinear controller such as model predictive control, for example. The actual grid power value $P_{grid,act}$ may be determined from the input vector such that the generator power reference value $P_{gen,ref}$ is determined from the input vector also.

Fig. 3 shows a block diagram of another exemplary embodiment of the DC link controller 34 of the converter arrangement 20. The DC link controller 34 of figure 3 may widely correspond to the DC link controller 34 of figure 2. Therefore, only those features of the DC link controller 34 of figure 3 are explained in the following, in which the DC link controller 34 of figure 3 differs from the DC link controller 34 of figure 2, in order to provide a concise description and to avoid unnecessary repetitions.

In particular, the estimated synchronization power value $\Delta P$ may be filtered, e.g., by a low-pass filter. A cut-off frequency of the corresponding low-pass filter LPF may be $f_{ff}$.

Before filtering the estimated synchronization power value $\Delta P$, the estimated synchronization power value $\Delta P$ may be amplified by a gain $\tilde{G}$ corresponding to

$$\tilde{G} = \frac{G}{2\pi f_{\text{ff}}} + \frac{1}{K_p}$$

where $K_p$ represents a proportional gain approximation of $K(s)$, and $G = \dfrac{1}{C_{dc}V_{dc,nominal}}$ with $C_{dc}$ being the total DC link capacitance, and $V_{dc,nominal}$ being the nominal DC link voltage value.

After subtracting the modified and filtered estimated synchronization power value $\Delta P$ from the DC link voltage reference vector $v_{dc}^*$, the corresponding difference may be processed by a saturation block 54. In addition, the changes in the DC link voltage reference vector $v_{dc}^*$ may also be limited in a predetermined way to guarantee that it remains within its safety limits.

Optionally, the filtered actual grid power value $P_{grid,act}$ may be used for determining the generator power reference value $P_{gen,ref}$ instead of the filtered difference between the actual grid power value $P_{grid,act}$ and the estimated synchronization power value $\Delta P$, in contrast to the embodiment described with respect to figure 2.

The DC link controller 34 shown in figure 3 has the property that it inherently decides on when to vary its bandwidth based on the additional power needed for the grid-forming control. This new bandwidth can be adjusted by the tuning of the gain $\tilde{G}$. Moreover, if the modified DC link voltage reference vector $v_{dc}^*$ would be beyond its safety limits, the controller automatically increases its bandwidth.

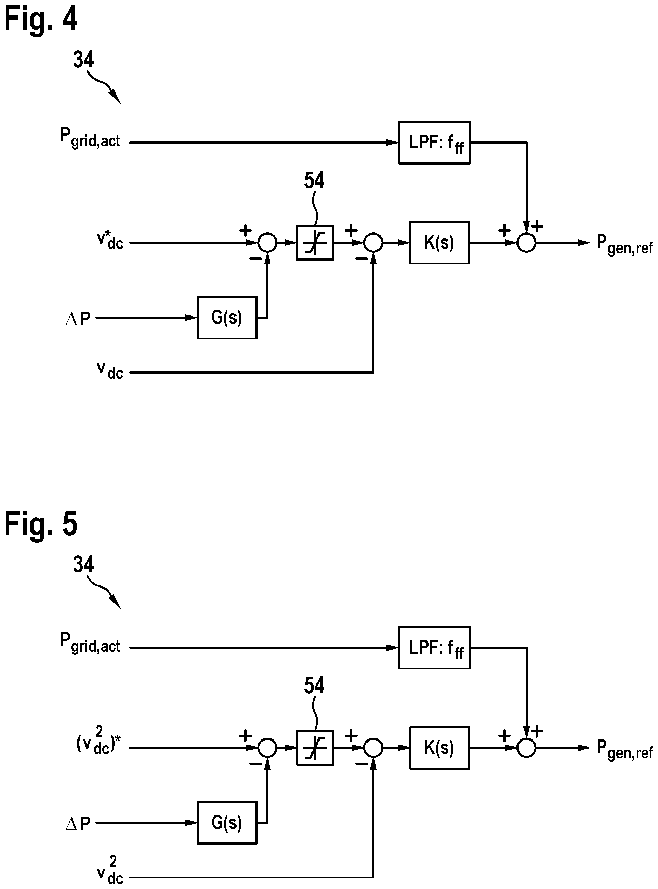

Fig. 4 shows a block diagram of an exemplary embodiment of the DC link controller 34 of the converter arrangement 20. The DC link controller 34 of figure 4 may widely correspond to the DC link controller 34 of figure 3. Therefore, only those features of the DC link controller 34 of figure 4 are explained in the following, in which the DC link controller 34 of figure 4 differs from the DC link controller 34 of figure 3, in order to provide a concise description and to avoid unnecessary repetitions.

The estimated synchronization power value $\Delta P$ may be processed by a second transfer function $G(s)$. The second transfer function $G(s)$ may be embodied as and/or carried out by a corresponding controller, e.g., a linear controller, a look-up table, or a nonlinear controller such as model predictive control. The determined generator power reference value $P_{gen,ref}$ may be converted to the torque reference value $T_{ref}$, or a new pitch angle.

Fig. 5 shows a block diagram of an exemplary embodiment of the DC link controller 34 of the converter arrangement 20. The DC link controller 34 of figure 5 may widely correspond to the DC link controller 34 of figure 4. Therefore, only those features of the DC link controller 34 of figure 5 are explained in the following, in which the DC link controller 34 of figure 5 differs from the DC link controller 34 of figure 4, in order to provide a concise description and to avoid unnecessary repetitions.

In this embodiment, the square $(v_{dc}^2)^*$ of the DC link voltage reference vector $v_{dc}^*$ may be used as a voltage reference which may be modified by the estimated synchronization power value $\Delta P$ processed by the second transfer function $G(s)$. In addition, the squared DC link voltage vector $v^2_{dc}$ is used as a measurement feedback which is accounted for when determining the generator power reference value $P_{gen,ref}$.

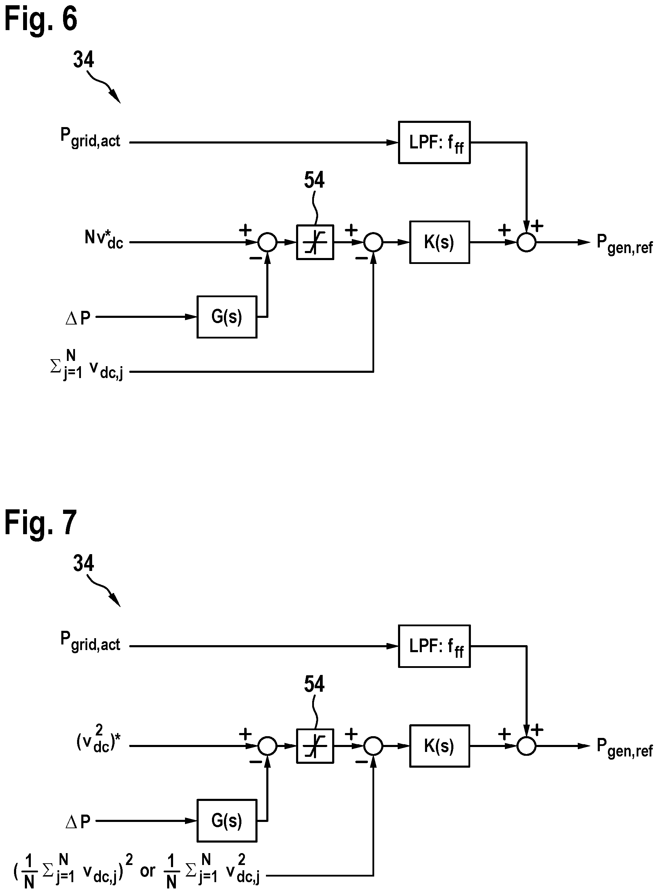

The method explained in the foregoing with respect to figures 1 to 5 may also be used to address a converter arrangement 20 where N electrical converters 22 are used, as explained with respect to figures 6 to 9. These N electrical converters 22 may be electrically arranged in series or in a parallel configuration with separate or common DC links, with N being a natural number. In the case of separate DC links, the DC link control may be implemented based on the sum of the DC link voltages as described with respect to figure 6, wherein for the squared voltages as in figure 5, it is described with respect to figure 7.

Fig. 6 shows a block diagram of an exemplary embodiment of the DC link controller 34 of the converter arrangement 20. In this case, the converter arrangement 20 has N electrical converters 22. The DC link controller 34 of figure 6 may widely correspond to the DC link controller 34 of figure 4. Therefore, only those features of the DC link controller 34 of figure 6 are explained in the following, in which the DC link controller 34 of figure 6 differs from the DC link controller 34 of figure 4, in order to provide a concise description and to avoid unnecessary repetitions.

At least one input vector, e.g., the measured DC link voltage vector $v_{dc,j}$, for each of the electrical converters 22 may be received, with j being a natural number in a range from 1 to N. The input vectors may be representative of an electric power of the corresponding electrical converter 22. In particular, the filtered estimated synchronization power value $\Delta P$ may be subtracted from N times the DC link voltage reference vector $v_{dc}^*$ before feeding the corresponding result into the saturation block 54. Then, the generator power reference value $P_{gen,ref}$ may be determined from a sum of the received input vectors divided by N and the result may be subtracted from the output of the saturation block 54.

Fig. 7 shows a block diagram of an exemplary embodiment of the DC link controller 34 of the converter arrangement 20. In this case, the converter arrangement 20 has N electrical converters 22. The DC link controller 34 of figure 7 may widely correspond to the DC DC link controllers 34 of figures 5 and 6. Therefore, only those features of the DC link controller 34 of figure 7 are explained in the following, in which the DC link controller 34 of figure 7 differs from the DC link controller 34 of figures 5 and 6, in order to provide a concise description and to avoid unnecessary repetitions. In this embodiment, the input vectors, in particular the DC link voltage vectors $v_{dc,j}$ of the N electrical converters 22 may be summed up, the sum may be divided by N, and the result may be squared, before subtracting the final result from the modified square of the voltage reference vector $v_{dc}^*$. Alternatively, the DC link voltage vectors $v_{dc,j}$ of the N electrical converters 22 may be squared first, than the squared DC link voltage vectors $v_{dc,j}^2$ may be summed up, and the sum may be divided by N, before subtracting the final result from the modified square of the voltage reference vector $(v_{dc}^2)^*$.

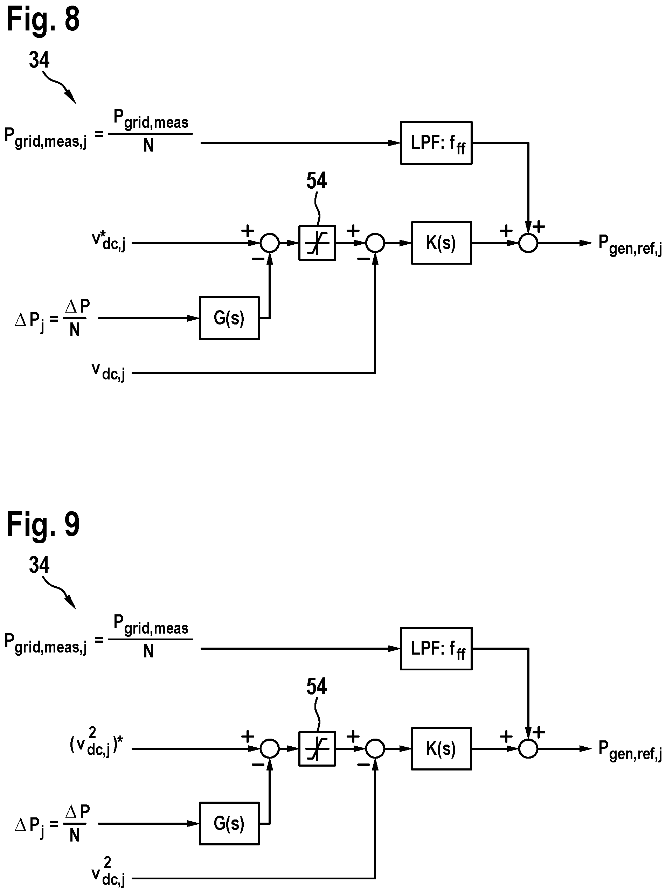

However, the DC link control may also be implemented for separate DC link controllers, as described in the following with respect to figures 8 and 9, wherein the figures refer to the controller for the electrical converter 22 number j of the N electrical converters 22. According to the embodiments presented in these figures, estimated synchronization power value $\Delta P$ and the actual grid power value $P_{grid,act}$ may be equally distributed to different ones of the electrical converters 22. However, depending on the grid-side control implementation, these quantities may also be redistributed as long as

$$\Delta P = \sum_{j=1}^{N} \Delta P_j \text{ and } P_{grid,meas}^N = \sum_{j=1}^{N} P_{grid,\,meas,j} \text{ hold.}$$

Fig. 8 shows a block diagram of an exemplary embodiment of the DC link controller 34 of the converter arrangement 22. The DC link controller 34 of figure 8 may widely correspond to the DC link controllers 34 of figures 4 and 6. Therefore, only those features of the DC link controller 34 of figure 8 are explained in the following, in which the DC link controller 34 of figure 8 differs from the DC link controllers 34 of figures 4 and 6, in order to provide a concise description and to avoid unnecessary repetitions.

In this case, the measured DC link voltage vector $v_{dc,j}$ of the electrical converter 22 number j is used as voltage measurement feedback and the generator power reference value $P_{gen,ref,j}$ may be used for this electrical converter 22 only. In addition, the estimated synchronization power value $\Delta P_j$ for this electrical converter 22 may be determined by dividing the estimated synchronization power value $\Delta P$ by N before modifying the corresponding DC link voltage reference vector $v_{dc,j}^*$ thereby. Further, the measured grid power value $P_{grid,meas,j}$ for the electrical converter 22 number j may be determined by dividing the measured grid power value $P_{grid,meas}$ by N before processing the corresponding quotient by the low-pass filter LPF.

Fig. 9 shows a block diagram of an exemplary embodiment of the DC link controller 34 of the converter arrangement. The DC link controller 34 of figure 9 may widely correspond to the DC link controllers 34 of figures 5 and 7. Therefore, only those features of the DC link controller 34 of figure 9 are explained in the following, in which the DC link controller 34 of figure 9 differs from the DC link controllers 34 of figures 5 and 7, in order to provide a concise description and to avoid unnecessary repetitions.

In this case, the squared measured DC link voltage vector $v_{dc,j}^2$ of the electrical converter 22 number j is used as voltage measurement feedback and the resulting generator power reference value $P_{gen,ref,j}$ may be used for this electrical converter 22 only. In addition, the estimated synchronization power value $\Delta P_j$ for this electrical converter 22 may be determined by dividing the estimated synchronization power value $\Delta P$ by N before modifying the corresponding DC link voltage reference vector $v_{dc,j}^*$ thereby. Further, the measured grid power value $P_{grid,meas,j}$ for the electrical converter 22 number j may be determined by dividing the measured grid power value $P_{grid,meas}$ by N before processing the corresponding quotient by the low-pass filter LPF. The measured grid power value $P_{grid,meas,j}$ may be determined from the corresponding measured input vector.

The DC link voltages and in particular their values and/or vectors used for carrying out the above method may correspond to the sum or the difference of more than one DC link voltage measurements typically available in the above multi-conversion line case.

The method described in the foregoing based on several block diagrams can be used with any grid-forming controller, and it is not limited to those which are discussed herein. The method can address a converter control system with any inner current or flux controllers, including proportional (resonant) controllers, proportional-integral controllers, and model predictive controllers. The method can be used with any grid-connected electrical converter including single or N > 1 parallel conversion lines, and two-level, three-level, and general multilevel converters.

The method described in the foregoing based on several block diagrams may be embodied as computer program. The computer program may have computer-readable instructions which, when being executed by the processor of the control unit 24, force the control unit 24 to carry out the method at the electrical converter 22 of the converter arrangement 20.

The computer program may be stored on a computer-readable medium. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading the program code. In general, the computer-readable medium may be a non-transitory or transitory medium.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## LIST OF REFERENCE SYMBOLS

| | |
|---|---|
| Converter arrangement | 20 |
| Electrical converter | 22 |
| Control unit | 24 |
| Generator | 26 |
| Grid | 28 |
| DC link | 29 |
| Point of common coupling | 30 |
| Transformer | 31 |
| Power estimator | 32 |
| DC link controller | 34 |
| First control block | 36 |
| Current/flux reference block | 38 |
| Current/flux controller | 40 |
| AC control block | 42 |
| Saturation block | 44 |
| Current controller | 46 |
| Second control block | 50 |
| Third control block | 52 |
| Saturation block | 54 |
| Control signal | CS |
| PCC voltage vector | $v_{pcc}$ |
| Generator current vector | $i_{gen}$ |
| Generator current reference vector | $i_{gen,ref}$ |
| Generator flux vector | $\Psi_{gen}$ |
| Generator flux reference vector | $\Psi_{gen}$ |
| DC link voltage vector | $v_{dc}$, $v^2_{dc}$ |
| DC link voltage reference vector | |
| Grid power reference value | $P_{grid,re}f$ |
| Actual grid power value | $P_{grid,act}$ |
| Measured grid power value | $P_{grid,meas}$ |

(continued)

| Generator power reference value | $P_{gen,ref}$ |
|---|---|
| Torque reference value | $T_{ref}$ |
| Rotational speed value | $\omega_R$ |
| Synchronization power value | $\mathit{\Delta}P$ |
| Low-pass filter | LPF |
| First transfer function | $K(s)$ |
| Second transfer function | $G(s)$ |
| First filter | G/s |
| Gain | $\tilde{G}$ |
| Natural number | N |
| Grid current reference vector | $i_{grid,ref}$ |
| Actual current vector | $i_{act}$ |
| Grid-side converter voltage vector | $v_{con}$ |

**Claims**

1. A method for operating a converter arrangement (20) having at least one electrical converter (22) electrically coupling a generator (26) to a grid (28) and a control unit (24) for operating the electrical converter (22), the method comprising:

   receiving an input vector ($v_{con}$, $v_{pcc}$, $i_{act}$) being representative of an electric power of the electrical converter (22);
   estimating a synchronization power value ($\mathit{\Delta}P$) being representative of a synchronization power needed for synchronizing the electrical converter (22) to the grid (28);
   determining a generator power reference value ($P_{gen,ref}$) from the input vector ($v_{con}$, $v_{pcc}$, $i_{act}$) and the estimated synchronization power value ($\mathit{\Delta}P$);
   generating a control signal (CS) for the electrical converter (22) depending on the determined generator power reference value ($P_{gen,ref}$); and
   sending the control signal (CS) to the electrical converter (22), wherein the control signal (CS) and the electrical converter (22) are configured such that the electrical converter (22) tries to generate the electric power corresponding to the generator power reference value ($P_{gen,ref}$) upon receiving the control signal (CS).

2. The method according to claim 1, wherein the received input vector ($v_{con}$, $v_{pcc}$, $i_{act}$) is

   a voltage vector ($v_{con}$, $v_{pcc}$) being representative of a voltage of the electrical converter (22), or
   a current vector ($i_{act}$) being representative of a current through the electrical converter (22).

3. The method according to one of the preceding claims, wherein the synchronization power value ($\mathit{\Delta}P$) is estimated by

   receiving a grid power reference value ($P_{grid,ref}$) being representative of an electric power to be provided by the grid (28);
   determining an actual grid power value ($P_{grid,act}$) being representative of an electric power currently provided by the grid (28) from the input vector ($v_{con}$, $v_{pcc}$, $i_{act}$); and
   determining a first difference between the grid power reference value ($P_{grid,ref}$) and the actual grid power value ($P_{grid,act}$), wherein the determined difference is used as the synchronization power value ($\mathit{\Delta}P$).

4. The method according to one of the claims 1 or 2, wherein the synchronization power value ($\mathit{\Delta}P$) is estimated by

   receiving a grid power reference value ($P_{grid,ref}$) being representative of an electric power to be provided by the grid (28), or determining an actual grid power value ($P_{grid,act}$) being representative of an electric power currently provided by the grid (28) from the input vector ($v_{con}$, $v_{pcc}$, $i_{act}$); and
   filtering the received grid power value ($P_{grid,ref}$, $P_{grid,act}$), wherein the corresponding filtered grid power value ($P_{grid,ref}$, $P_{grid,act}$) is used as the synchronization power value ($\mathit{\Delta}P$).

5. The method according to one of the claims 1 or 2, wherein the synchronization power value ($\mathit{\Delta}P$) is estimated by

receiving a grid current reference vector ($i_{grid,ref}$) being representative of at least a part of the current to be provided to the grid (28); and
estimating the synchronization power value ($\varDelta P$) from the received grid current reference vector ($i_{grid,ref}$).

6. The method according to one of the preceding claims, wherein the generator power reference value ($P_{gen,ref}$) is determined from the input vector ($v_{con}$, $v_{pcc}$, $i_{act}$) and the estimated synchronization power value ($\varDelta P$) by

   modifying a DC link voltage reference vector ( $v_{dc}^*$, $(v_{dc}^2)^*$ ) by the estimated synchronization power value ($\varDelta P$);
   determining an actual grid power value ($P_{grid,act}$) being representative of an electric power currently provided by the grid (28) from the received input vector ($v_{con}$, $v_{pcc}$, $i_{act}$); and
   determining the generator power reference value ($P_{gen,ref}$) from the modified DC link voltage reference vector ( $v_{dc}^*$, $(v_{dc}^2)^*$ ) and the actual grid power value ($P_{grid,act}$).

7. The method according to claim 6, wherein the DC link voltage reference vector ( $v_{dc}^*$ ) is modified by the estimated synchronization power value ($\varDelta P$) by

   filtering the estimated synchronization power value ($\varDelta P$); and
   subtracting the filtered estimated synchronization power value ($\varDelta P$) from the DC link voltage reference vector ( $v_{dc}^*$, $(v_{dc}^2)^*$ ).

8. The method according to one of claims 6 or 7, wherein the generator power reference value ($P_{gen,ref}$) is determined from the modified DC link voltage reference vector ( $v_{dc}^*$ ) by

   receiving a DC link voltage vector ($v_{dc}$) being representative of a DC link voltage of a DC link (29) of the electrical converter (22);

   determining a second difference between the modified DC link voltage reference vector ( $v_{dc}^*$ ) and the received DC link voltage vector ($v_{dcc}$), and
   determining the generator power reference value ($P_{gen,ref}$) from the second difference.

9. The method according to one of the preceding claims, comprising:

   determining an actual grid power value ($P_{grid,act}$) being representative of an electric power currently provided by the grid (28) from the received input vector ($v_{con}$, $v_{pcc}$, $i_{act}$); and
   determining the generator power reference value ($P_{gen,ref}$) from the actual grid power value ($P_{grid,act}$).

10. The method according to one of claims 6 to 8 and to claim 9, wherein the generator power reference value ($P_{gen,ref}$) is determined from the actual grid power value ($P_{grid,act}$) by

    filtering the actual grid power value ($P_{grid}$), and
    adding the filtered actual grid power measurement value ($P_{grid,act}$) to the modified DC link voltage reference vector ( $v_{dc}^*$ ), wherein the resulting sum is used as the generator power reference value ($P_{gen,ref}$).

11. The method according to one of the preceding claims, wherein the generator power reference value ($P_{gen,ref}$) is determined from the input vector ($v_{con}$, $v_{pcc}$, $i_{act}$) and the estimated synchronization power value ($\varDelta P$) by

    modifying a DC link voltage reference vector ( $v_{dc}^*$ ) by the estimated synchronization power value ($\varDelta P$); and
    determining the generator power reference value ($P_{gen,ref}$) from the modified DC link voltage reference vector ( $v_{dc}^*$ ).

12. The method according to one of the preceding claims, wherein the converter arrangement (20) has at least two electrical converters (22) and the generator power reference value ($P_{gen,ref}$) is determined from the input vector ($v_{con}$, $v_{pcc}$, $i_{act}$) and the estimated synchronization power value ($\Delta P$) by

receiving at least one DC link voltage vector ($v_{dc,j}$, $v^2_{dc,j}$) for each of the electrical converters (22), with the DC link input vectors ($v_{dc,j}$, $v^2_{dc,j}$) being representative of an electric power of the corresponding electrical converter (22), determining an actual grid power value ($P_{grid,act}$) being representative of an electric power currently provided by the grid (28) from the received input vector ($v_{con}$, $v_{pcc}$, $i_{act}$); and
determining the generator power reference value ($P_{gen,ref}$) from a sum of the received DC link voltage vectors ($v_{dc,j}$, $v^2_{dc,j}$) and the determined actual grid power value ($P_{grid,act}$).

13. A control unit (24) for operating a converter arrangement (20) having at least one electrical converter (22) electrically coupling a generator (26) to a grid (28) and a control unit (24) for operating the electrical converter (22), the control unit (24) comprising:

a memory for storing one or more input vectors ($v_{con}$, $v_{pcc}$, $i_{act}$) and power reference values ($P_{grid,ref}$, $P_{gen,ref}$); and
a processor communicatively coupled with the memory and being configured to carry out the method in accordance with one of the preceding claims based on the input vectors ($v_{con}$, $v_{pcc}$, $i_{act}$) and the power reference values ($P_{grid,ref}$, $P_{gen,ref}$) stored in the memory.

14. A converter arrangement (20), comprising:

at least one electrical converter (22) configured for electrically coupling a generator (26) to a grid (28); and
a control unit (24) in accordance with claim 13 and being communicatively coupled to the electrical converter (22) for driving the electrical converter (22).

15. A computer program, comprising computer-readable instructions which, when being executed by a processor of a control unit (24) in accordance with claims 13 or 14, force the control unit (24) to carry out the method in accordance with one of claims 1 to 12 at the electrical converter (22) of the converter arrangement (20) according to claim 14.

**Fig. 1**

# Fig. 2

# Fig. 3

# Fig. 4

34

$P_{grid,act}$ ──────────────────────────────────► LPF: $f_{ff}$ ──────┐

54

$v_{dc}^*$ ──────► + ◯ ──► / ──► + ◯ ──► K(s) ──► + ◯ ──► $P_{gen,ref}$
             −           −                      +

$\Delta P$ ──────► G(s) ──┘

$v_{dc}$ ─────────────────────────────┘

# Fig. 5

34

$P_{grid,act}$ ──────────────────────────────────► LPF: $f_{ff}$ ──────┐

54

$(v_{dc}^2)^*$ ──────► + ◯ ──► / ──► + ◯ ──► K(s) ──► + ◯ ──► $P_{gen,ref}$
             −           −                      +

$\Delta P$ ──────► G(s) ──┘

$v_{dc}^2$ ─────────────────────────────┘

# Fig. 6

# Fig. 7

## Fig. 8

34

$$P_{grid,meas,j} = \frac{P_{grid,meas}}{N}$$ → LPF: $f_{ff}$

54

$v^*_{dc,j}$ → + − ⊕ → ⌿ → + − ⊕ → K(s) → + + ⊕ → $P_{gen,ref,j}$

$$\Delta P_j = \frac{\Delta P}{N}$$ → G(s)

$v_{dc,j}$

## Fig. 9

34

$$P_{grid,meas,j} = \frac{P_{grid,meas}}{N}$$ → LPF: $f_{ff}$

54

$(v^2_{dc,j})^*$ → + − ⊕ → ⌿ → + − ⊕ → K(s) → + + ⊕ → $P_{gen,ref,j}$

$$\Delta P_j = \frac{\Delta P}{N}$$ → G(s)

$v^2_{dc,j}$

Europäisches
Patentamt
European
Patent Office
Office européen
des brevets

**EUROPEAN SEARCH REPORT**

Application Number

EP 24 21 7033

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/141141 A1 (VESTAS WIND SYS AS [DK]) 4 July 2024 (2024-07-04) | 1-4,9, 13-15 | INV. H02J3/40 |
| A | * figures 3-5 * <br> * page 12, line 10 - page 28, line 5 * | 6-8,10, 11 | F03D7/04 |
| | ----- | | |
| X | CN 113 346 562 A (UNIV JIANGSU) 3 September 2021 (2021-09-03) | 1,2,5,9, 13-15 | |
| A | * figure 4 * <br> * paragraph [0057] - paragraph [0066] * | 6-8,10, 11 | |
| | ----- | | |
| X | XIAO-PING YANG ET AL: "Low Voltage Ride-Through of Directly Driven Wind Turbine with Permanent Magnet Synchronous Generator", POWER AND ENERGY ENGINEERING CONFERENCE, 2009. APPEEC 2009. ASIA-PACIFIC, IEEE, PISCATAWAY, NJ, USA, 27 March 2009 (2009-03-27), pages 1-5, XP031454957, ISBN: 978-1-4244-2486-3 | 1-3,9, 13-15 | |
| Y | * figure 4 * | 12 | TECHNICAL FIELDS SEARCHED (IPC) |
| A | * Section III.B * | 6-8,10, 11 | H02J F03D |
| | ----- | | |
| Y | US 2024/014753 A1 (LUND TORSTEN [DK] ET AL) 11 January 2024 (2024-01-11) * paragraph [0064] - paragraph [0065] * * figure 3 * | 12 | |
| | ----- | | |

The present search report has been drawn up for all claims

| Place of search | Date of completion of the search | Examiner |
|---|---|---|
| Munich | 15 May 2025 | Chabas, Julien |

EPO FORM 1503 03.82 (P04C01)

**EP 4 757 105 A1**

## ANNEX TO THE EUROPEAN SEARCH REPORT
## ON EUROPEAN PATENT APPLICATION NO.

EP 24 21 7033

15-05-2025

| Patent document cited in search report | | Publication date | Patent family member(s) | | Publication date |
|---|---|---|---|---|---|
| WO 2024141141 | A1 | 04-07-2024 | NONE | | |
| CN 113346562 | A | 03-09-2021 | NONE | | |
| US 2024014753 | A1 | 11-01-2024 | CN 116195179 A | | 30-05-2023 |
| | | | EP 4193458 A1 | | 14-06-2023 |
| | | | US 2024014753 A1 | | 11-01-2024 |
| | | | WO 2022028660 A1 | | 10-02-2022 |

EPO FORM P0459